# EUROPEAN PATENT SPECIFICATION

(11) **EP 3 125 341 B1**
(45) Date of publication and mention of the grant of the patent: **14.11.2018**
(21) Application number: 14887348.2
(22) Date of filing: 20.08.2014
(51) Int. Cl.: H01M 4/68, C22C 11/06, C22F 1/12, H01M 4/74, C22F 1/00, H01M 10/06

(54) **LEAD STORAGE CELL AND ELECTRODE COLLECTOR FOR LEAD STORAGE CELL**
BLEISPEICHERZELLE UND ELEKTRODENKOLLEKTOR FÜR BLEISPEICHERZELLE
CELLULE D'ACCUMULATION AU PLOMB ET COLLECTEUR D'ÉLECTRODE DE CELLULE D'ACCUMULATION AU PLOMB

(30) Priority: 28.03.2014 JP 2014068058
(43) Date of publication of application: 01.02.2017
(73) Proprietor: HITACHI CHEMICAL COMPANY, LTD., Chiyoda-ku Tokyo 100-6606 (JP)
(72) Inventor: MUKAITANI Ichiroh, Tokyo , 100-6606, (JP); SAKAMOTO Takeo, Tokyo, 100-6606 (JP)
(74) Representative: Addiss, John William
(86) International application number: PCT/JP2014/071775
(87) International publication number: WO 2015/145800

(56) References cited:
- WO-A1-2013/073420
- WO-A1-2013/073420
- CN-A- 1 338 788
- JP-A- 2001 236 962
- JP-A- 2001 236 962

## Description

### TECHNICAL FIELD

The present invention relates to a lead-acid battery including a battery case and an electrode group formed by stacking a negative electrode and a positive electrode via a separator and housed in the battery case together with an electrolyte, and to an electrode current collector for the lead-acid battery.

### BACKGROUND ART

JP 4852869 (Patent Document 1) discloses a technique of manufacturing an electrode lattice (an electrode current collector) for a lead-acid battery using a lead alloy (a lead sheet formed by slab casting) containing calcium and tin. In this technique, a rolled material formed by subjecting the lead alloy to a rolling process is used for the purpose of increasing the lattice density of the current collector.

JP 2000-195524 A (Patent Document 2) discloses a lattice body (a current collector) for a lead-acid battery made from a lead alloy which is a Pb-Ca-Sn alloy containing Bi (bismuth) as impurities. The raw material cost of the lead alloy containing impurities is low. Therefore, the manufacturing cost of the lead-acid battery can be reduced by using such raw material to manufacture the lattice body for the lead-acid battery.

WO 2013/073420 A1 discloses a liquid lead storage battery having a collector that is formed of a lead alloy, which contains 0.01-0.1% by mass of calcium, 0.05-2% by mass of tin and 0.05-0.15% by mass of bismuth, and additionally silver or indium, that is used as a positive electrode collector. In some cases, silver is contained in an amount of 0.005-2% by mass and indium is contained in an amount of 0.01-0.5% by mass.

JP 2001236962 discloses a positive electrode grill consisting of an alloy of lead, calcium, tin and indium. In some cases, the alloy contains 0.01 to 0.1% by mass of calcium, 1.0 to 2.5% by mass of tin, and 0.01 to 0.5% by mass of indium.

CN 1338788 discloses a multi-element alloy plate electrode for an accumulator containing In (0.06-0.08%), Ca (0.06-0.1%), Sn (0.015-0.025%) and Pb (rest).

### Related-Art Document

### Patent Document

Patent Document 1: JP 4852869
Patent Document 2: JP 2000-195524 A (paragraph [0011])

### SUMMARY OF INVENTION

### TECHNICAL PROBLEM

Theoretically, the more the degree of rolling process (a draft rate) is raised, the more the lattice density of a current collector will be increased. Thus, the rolling process can improve the battery performance (a cycle life, etc.). In a current collector which uses a lead alloy containing Bi, however increasing the draft rate in the rolling process will accelerate intergranular corrosion, which tends to reduce the creep durability. Therefore, when using a lead alloy containing impurities such as Bi to manufacture a current collector, there is a limit to the conventional art in increasing a draft rate in the rolling process, thereby failing to improve the battery performance.

An object of the present invention is to provide a lead-acid battery and an electrode current collector for a lead-acid battery that can attain improved battery performance by increasing the draft rate in a rolling process even if the current collector is manufactured using a lead alloy containing Bi.

Another object of the present invention is to provide a lead-acid battery and an electrode current collector for a lead-acid battery, wherein the durability of an electrode current collector is not reduced significantly even if the draft rate in a rolling process is increased when the current collector is manufactured using a lead alloy containing Bi.

### SOLUTION TO PROBLEM

A lead-acid battery, which the present invention is aimed at improving, includes a battery case and an electrode group housed in the battery case together with an electrolyte. The electrode group is formed by stacking a negative electrode and a positive electrode via a separator. The negative electrode includes a negative current collector on which a negative active material is held. The positive electrode includes a positive current collector on which a positive active material is held. The positive current collector which constitutes the lead-acid battery according to the present invention is made of a lead alloy. The lead alloy contains 0.05 to 0.1% by mass of Ca, 1.2 to 2.2% by mass of Sn, and 0.002 to 0.03% by mass of In, and contains, as unavoidable impurities, at least 0.001 to 0.04% by mass of Bi, the remainder being Pb. The lead alloy is subjected to a rolling process at a draft rate (degree of rolling process) of 80 to 97.5%.

When the lead alloy having the above-mentioned composition is used, occurrence of intergranular corrosion is suppressed, even if the rolling process is performed at a significantly high draft rate (a draft rate of 80 to 97.5%), thereby lessening a reduction in durability of the current collector. In other words, the rolling process can be performed at a significantly high draft rate (a draft rate of 80 to 97.5%), which could not be achieved conventionally, even if a lead alloy containing impurities such as Bi is used. Therefore, the lattice density of the current collector can be increased compared to the related art, thereby improving the battery performance (such as cycle life).

If the lead alloy further contains 0.003 to 0.2% by mass of Ag, the ductility and the malleability (processability) of the lead alloy can be enhanced without degrading the improvement in strength (the effect of suppressing occurrence of intergranular corrosion). That is, a positive current collector having both of high durability and good processability at the same time can be obtained by including both In and Ag in the lead alloy which contains Bi.

Preferably, after a strength of the lead alloy has reached a maximum strength (a relative value of the tensile strength), the lead alloy is continued to be subjected to the rolling process until a maximum elongation rate of the lead alloy becomes 150% or more of a maximum elongation rate at the time when the strength of the lead alloy reaches the maximum strength. The statement "after a strength of the lead alloy has reached a maximum strength (a relative value of the tensile strength), the lead alloy is continued to be subjected to the rolling process until a maximum elongation rate of the lead alloy becomes 150% or more of a maximum elongation rate at the time when the strength of the lead alloy reaches the maximum strength" means that, when the lead alloy is subjected to the rolling process until a strength of the lead alloy reaches a maximum strength (a relative value of the tensile strength) and is continued to be subjected to the rolling process after the maximum strength is reached, the elongation rate of the lead alloy after the further rolling process is 150% of the elongation rate of the lead alloy at the time when the maximum strength is reached as compared to the elongation rate before the rolling process. Thus, subjecting the lead alloy to the rolling process before the lead alloy is hardened can reduce concentration of distortion in grain boundary, thereby positively lessening a reduction in durability of the positive current collector.

The lead alloy used in the present invention may be further subjected to an expanding process. If the lead alloy according to the related art is subjected to the expanding process, the lead alloy is work-hardened, but recrystallized (at a recrystallization temperature of 0 to 60°C), which reduces the strength of the lead alloy. In contrast, if an expanding process is performed on a rolled material obtained by performing a rolling process at a high draft rate on the lead alloy having the composition according to the present invention, work-hardening is caused while suppressing recrystallization, thereby preventing the current collector from degrading in strength. In consideration of the processability for the expanding process, the expanding process is preferably performed when the tensile strength of the lead alloy before the expanding process is 52 MPa or less. As a matter of course, a punching process may be performed as an alternative to the expanding process.

The positive current collector which constitutes a part of the lead-acid battery discussed above may constitute an electrode current collector for the lead-acid battery according to the present invention. The electrode current collector for the lead-acid battery according to the present invention is not limited to the positive current collector, but may also be the negative current collector as long as the electrode current collector has the configuration discussed above.

### DESCRIPTION OF EMBODIMENTS

An embodiment of the present invention will be described below. Although not specifically illustrated, the lead-acid battery used in the embodiment of the present invention is a lead-acid battery manufactured according to the related art. The lead-acid battery includes a battery case and an electrode group housed in the battery case together with an electrolyte. The electrode group is formed by stacking a negative electrode and a positive electrode via a separator. The negative electrode includes a negative current collector on which a negative active material is held. The positive electrode includes a positive current collector on which a positive active material is held. The positive current collector is made of a lead alloy. The electrode current collector according to the embodiment of the present invention is a positive current collector which constitutes the positive electrode of the lead-acid battery according to the embodiment. Various tests were conducted using the lead-acid battery according to the embodiment.

### [Draft Rate (Rolling Processability)]

The positive current collector for use in the tests of the embodiment was fabricated as follows. First, slabs of lead alloy having the alloy compositions indicated in Table 1 were prepared, and rapidly cooled to 0°C and stored. The lead alloy slabs which were maintained at 0° were subjected to a rolling process using a roller until their thicknesses became a predetermined thickness. Specifically, the degree of processing (draft rate) (%) was calculated from the thickness (20 mm) of the slab before the rolling process and the thickness (mm) of the slab after the rolling process to examine the relationship between the draft rate and the processability. Table 1 indicates the results.

**[Table 1]**

| | Alloy composition (mass % for Ca and Sn, ppm for Ag, In, and Bi) | | | | | Thickness before process (mm) | Thicknes s after process (mm) | Draft rate (%) | Processability | Maximum strength | Limit elongation (%) | Cycle number (%) |
|---|---|---|---|---|---|---|---|---|---|---|---|---|
| | Ca | Sn | In | Ag | Bi | | | | | | | |
| Comp. Ex. 1 | 0.04 | 1.6 | ≤ 3 | ≤ 5 | ≤ 5 | 20 | 1.5 | 92.5 | Good | 130 | 165 | 60 |
| Comp. Ex. 2 | 0.04 | 1.6 | ≤ 3 | ≤ 5 | 50 | 20 | 1.5 | 92.5 | Unstable | 145 | 165 | 75 |
| Comp. Ex. 3 | 0.08 | 1.6 | 200 | 300 | 50 | 20 | 20 | 0 | Good | 100 | 300 | 60 |
| Comp. Ex. 4 | 0.08 | 1.6 | 200 | 300 | 50 | 20 | 18 | 10 | Good | 105 | 240 | 70 |
| Comp. Ex. 5 | 0.08 | 1.6 | 200 | 300 | 50 | 20 | 15 | 25 | Good | 110 | 210 | 70 |
| Comp. Ex. 6 | 0.08 | 1.6 | 200 | 300 | 50 | 20 | 12 | 40 | Good | 120 | 190 | 70 |
| Comp. Ex. 7 | 0.08 | 1.6 | 200 | 300 | 50 | 20 | 10 | 50 | Good | 125 | 175 | 70 |
| Comp. Ex. 8 | 0.08 | 1.6 | 200 | 300 | 50 | 20 | 8 | 60 | Good | 130 | 165 | 75 |
| Comp. Ex. 9 | 0.08 | 1.6 | 200 | 300 | 50 | 20 | 6 | 70 | Good | 135 | 158 | 85 |
| Comp. Ex. 10 | 0.08 | 1.6 | 200 | 300 | 50 | 20 | 5 | 75 | Good | 140 | 155 | 95 |
| Ex. 1 | 0.08 | 1.6 | 200 | 300 | 50 | 20 | 4 | 80 | Good | 160 | 155 | 100 |
| Ex. 2 | 0.08 | 1.6 | 200 | 300 | 50 | 20 | 3 | 85 | Good | 160 | 155 | 105 |
| Ex. 3 | 0.08 | 1.6 | 200 | 300 | 50 | 20 | 2 | 90 | Good | 162 | 155 | 110 |
| Ex. 4 | 0.08 | 1.6 | 200 | 300 | 50 | 20 | 1.5 | 92.5 | Good | 165 | 155 | 115 |
| Ex. 5 | 0.08 | 1.6 | 200 | 300 | 50 | 20 | 1 | 95 | Good | 165 | 155 | 120 |
| Ex. 6 | 0.08 | 1.6 | 200 | 300 | 50 | 20 | 0.8 | 96 | Good | 165 | 155 | 120 |
| Ex. 7 | 0.08 | 1.6 | 200 | 300 | 50 | 20 | 0.5 | 97.5 | Good | 165 | 150 | 120 |
| Comp. Ex. 11 | 0.08 | 1.6 | 200 | 300 | 50 | 20 | 0.45 | 97.75 | Unstable | 165 | 110 | 95 |
| Comp. Ex. 12 | 0.08 | 1.6 | 200 | 300 | 50 | 20 | 0.4 | 98 | Not processable | Not computable | 50 | - |

As seen from Table 1, the slab according to Comparative Example 1 which contained substantially no Bi (impurities) had good processability even when the draft rate was high. The slab according to Comparative Example 2, which contained Bi (impurities), contained the same components as those of the slab according to Comparative Example 1 except for Bi, and had unstable processability when the draft rate was high. Then, the composition ratios of Ca, Sn, Ag, and In were adjusted for the alloy containing Bi as indicated in Table 1. The processability was good when the draft rate was in the range of 0 to 97.5% (Comparative Examples 3 to 10 and Examples 1 to 7). In contrast, the processability was unstable when the draft rate was 97.75% (Comparative Example 11), and the slab could not be processed when the draft rate was 98% (Comparative Example 12).

### [Tensile Strength]

The positive current collector obtained by undergoing the rolling process as described above was stored at 0°C, and then age-hardened at 60°C for 200 hours. After that, the tensile strength of the positive current collector was measured. The tensile strength was measured for a test piece based on the JIS-13B standard at a speed of 10 mm/min using an autograph AGS-X5KN manufactured by Shimadzu Corporation. The tensile strength is indicated as a relative value (maximum strength), assuming that the tensile strength at a draft rate of 0% (Comparative Example 3) as 100. Table 1 indicates the results.

In Table 1, a maximum strength of 160 or more is evaluated as good. As a result, the maximum strength was good when the draft rate was 80% to 97.75% (Examples 1 to 7 and Comparative Example 11). In contrast, the maximum strength was less than 160 when the draft rate was 0% to 75% (Comparative Examples 3 to 10), and the maximum strength could not be calculated when the draft rate was 98% (Comparative Example 12).

It follows from the foregoing that the rolling processability was good and the maximum strength was high at the same time when the draft rate was in the range of 80 to 97.5% (Examples 1 to 7).

### [Elongation Rate at Maximum Strength (Limit Elongation)]

Judging from the rolling processability and the tensile strength as indicated in Table 1, it was found that the draft rate was preferably in the range of 80 to 97.5% (Examples 1 to 7). In Examples 1 to 7, the lead alloy was subjected to a rolling process such that the rolling process was ended when the maximum elongation rate (limit elongation in Table 1) of the lead alloy became 150% or more of the maximum elongation rate at the time when a strength of the lead alloy reached the maximum tensile strength. Specifically, the lead alloy was first subjected to cold rolling at 52 MPa, and thereafter subjected to a heat treatment at 85 MPa. When the lead alloy is subjected to a rolling process under such conditions, the rolling process is performed before the lead alloy is hardened (in this process, concentration of distortion in grain boundary is reduced), which makes it possible to reliably lessen a reduction in durability of the positive current collector.

### [Battery Characteristics Test]

Various tests for battery characteristics were conducted using a lead-acid battery manufactured as follows.

### (Positive Electrode)

A plurality of types of punched lattices each having a long side length of 300 mm (width direction), a short side length of 200 mm, and a thickness of 2.5 mm and respectively having compositions indicated in Table 2 and Table 3, which will be discussed later, were used as the positive current collector.

Positive electrode active material paste was prepared by adding 10 parts of 40% by mass of sulfuric acid and an appropriate amount of water to 90 parts of lead powder containing 75% of lead monoxide. The positive electrode active material paste was filled into the positive current collector described above. After that, the positive current collector was left in an atmosphere at a temperature of 80°C and a relative humidity of 98% or more for six hours; then it was left in an atmosphere at a temperature of 60°C and a relative humidity of 98% or more for 18 hours; and it was further left in an atmosphere at a temperature of 80°C and a relative humidity of 40% for 72 hours. Thus, a positive electrode was obtained.

### (Negative Electrode)

An expanded lattice having a long side length of 300 mm (width direction), a short side length of 200 mm, and a thickness of 1.5 mm and made of an alloy of Pb, 0.08% by mass of Ca, and 0.8% by mass of Sn was used as the negative current collector.

Negative electrode paste was prepared by adding 0.3% by mass of acetylene black (carbon black) to lead powder containing 75% by mass of lead monoxide. Then, 10% by mass of sulfuric acid with a concentration of 40%, water, and a negative electrode addition agent were added to 90% by mass of the resulting mixture. The thus obtained negative electrode paste was filled into the negative current collector described above. The electrode was left in an atmosphere at a temperature of 40°C and a relative humidity of 90% for eight hours, and then it was left in an atmosphere at a temperature of 80°C and a relative humidity of 40% for 16 hours. Thus, a negative electrode was obtained.

### (Separator)

A glass paper-like sheet with a density of 0.18 g/cm³, a width of 310 mm, a length of 210 mm, and a thickness of 1.4 mm was used to prepare a separator.

### (Electrode Group)

Two positive electrodes, three negative electrodes, and two separators were stacked with the separators between the positive electrodes and the negative electrodes to fabricate an electrode group.

### (Lead-acid Battery)

An electrolyte was prepared by chemically converting 25% by mass of dilute sulfuric acid in a battery jar such that the final concentration was 35% (dilute sulfuric acid solution) . The electrode group and the electrolyte described above were combined to assemble a lead-acid battery.

The lead-acid battery manufactured as described above was evaluated for the following variety of battery performance.

### [Cycle Life]

Next, the effect of the alloy composition of the current collector to be given on the cycle life was examined. A lead-acid battery was fabricated using positive current collectors (draft rate: 92.5%) having the compositions indicated in Table 2 and Table 3 and formed by subjecting a slab with a thickness of 20 mm to a rolling process until the thickness became 1.5 mm, and tested for the cycle life characteristics in a high-temperature environment. Specifically, charging at a charging voltage of 14.8 V (note that the current had been restricted to 25 A before the voltage of 14.8 V was reached) for ten minutes and discharging at a constant current of 25 A for four minutes in a thermostat bath at 75°C were defined as one cycle . The performance was checked at the time when a constant current of 300 A was discharged for 30 seconds every 480 cycles. In this test, it was determined that the battery went dead when the voltage reached 7.2 V or less during discharging of 30 seconds. The cycle life is indicated in the relative ratio (%) of the cycle number, assuming that the cycle number of the currently available product (Comparative Example 23 in which a lead alloy containing substantially no Bi as impurities is used) as 100 (See Table 2 and Table 3).

**[Table 2]**

| | Alloy composition (mass % for Ca and Sn, ppm for Ag, In, and Bi) | | | | | Corrosion elongation (%) | Cycle number (%) | Processability | Maximum strength |
|---|---|---|---|---|---|---|---|---|---|
| | Ca | Sn | In | Ag | Bi | | | | |
| Comp. Ex. 13 | 0.05 | 1.0 | 10 | 20 | ≤ 5 | 5.6 | 75 | ○ | 135 |
| Comp. Ex. 14 | 0.05 | 1.0 | 10 | 20 | 10 | 5.4 | 75 | ○ | 135 |
| Comp. Ex. 15 | 0.05 | 1.0 | 10 | 20 | 50 | 5.2 | 75 | ○ | 135 |
| Comp. Ex. 16 | 0.05 | 1.0 | 10 | 20 | 400 | 5.2 | 75 | ○ | 135 |
| Comp. Ex. 17 | 0.05 | 1.0 | 10 | 20 | 450 | 5.2 | 75 | ○ | 135 |
| Comp. Ex. 18 | 0.05 | 1.2 | 10 | 20 | ≤ 5 | 5.4 | 90 | ○ | 150 |
| Comp. Ex. 19 | 0.05 | 1.2 | 10 | 20 | 10 | 5.0 | 90 | ○ | 155 |
| Comp. Ex. 20 | 0.05 | 1.2 | 10 | 20 | 50 | 5.0 | 90 | ○ | 155 |
| Comp. Ex. 21 | 0.05 | 1.2 | 10 | 20 | 400 | 5.0 | 90 | ○ | 155 |
| Comp. Ex. 22 | 0.05 | 1.2 | 10 | 20 | 450 | 5.0 | 90 | ○ | 155 |
| Comp. Ex. 23 | 0.05 | 1.6 | 10 | 20 | ≤ 5 | 4.0 | 100 | ○ | 165 |
| Comp. Ex. 24 | 0.05 | 1.6 | 10 | 20 | 10 | 3.9 | 100 | ○ | 170 |
| Comp. Ex. 25 | 0.05 | 1.6 | 10 | 20 | 50 | 3.9 | 100 | ○ | 170 |
| Comp. Ex. 26 | 0.05 | 1.6 | 10 | 20 | 400 | 3.9 | 100 | ○ | 170 |
| Comp. Ex. 27 | 0.05 | 1.6 | 10 | 20 | 450 | 4.1 | 100 | ○ | 170 |
| Comp. Ex. 28 | 0.04 | 1.6 | 10 | 20 | ≤ 5 | 3.9 | 100 | ○ | 170 |
| Comp. Ex. 29 | 0.04 | 1.6 | 10 | 20 | 10 | 3.9 | 100 | ○ | 170 |
| Comp. Ex. 30 | 0.04 | 1.6 | 10 | 20 | 50 | 3.9 | 100 | ○ | 170 |
| Comp. Ex. 31 | 0.04 | 1.6 | 10 | 20 | 400 | 3.9 | 100 | ○ | 170 |
| Comp. Ex. 32 | 0.04 | 1.6 | 10 | 20 | 450 | 3.9 | 100 | ○ | 170 |
| Comp. Ex. 33 | 0.05 | 2.2 | 10 | 20 | ≤ 5 | 3.7 | 100 | Δ | 200 |
| Comp. Ex. 34 | 0.05 | 2.2 | 10 | 20 | 10 | 3.7 | 100 | Δ | 200 |
| Comp. Ex. 35 | 0.05 | 2.2 | 10 | 20 | 50 | 3.7 | 100 | Δ | 200 |
| Comp. Ex. 36 | 0.05 | 2.2 | 10 | 20 | 100 | 3.7 | 100 | Δ | 200 |
| Comp. Ex. 37 | 0.05 | 2.2 | 10 | 20 | 400 | 3.7 | 100 | Δ | 200 |
| Comp. Ex. 38 | 0.05 | 2.2 | 10 | 20 | 450 | 3.7 | 100 | Δ | 200 |
| Comp. Ex. 39 | 0.05 | 2.4 | 10 | 20 | ≤ 5 | 3.7 | 100 | x | 240 |
| Comp. Ex. 4 0 | 0.05 | 2.4 | 10 | 20 | 10 | 3.7 | 100 | x | 240 |
| Comp. Ex. 41 | 0.05 | 2.4 | 10 | 20 | 50 | 3.7 | 100 | Δ | 240 |
| Comp. Ex. 42 | 0.005 | 1.6 | 10 | 20 | 50 | 7.0 | 100 | ○ | 100 |
| Comp. Ex. 43 | 0.01 | 1.6 | 10 | 20 | 50 | 6.8 | 100 | ○ | 120 |
| Comp. Ex. 44 | 0.015 | 1.6 | 10 | 20 | 50 | 6.1 | 100 | o | 140 |
| Comp. Ex. 45 | 0.1 | 1.6 | 10 | 20 | 50 | 6.2 | 100 | ○ | 160 |
| Comp. Ex. 46 | 0.12 | 1.5 | 200 | 20 | 50 | 6.0 | 100 | ○ | 140 |
| Comp. Ex. 47 | 0.12 | 2.2 | 200 | 20 | 50 | 6.0 | 100 | Δ | 200 |
| Comp. Ex. 48 | 0.12 | 2.2 | 200 | 20 | 50 | 6.0 | 100 | Δ | 200 |
| Comp. Ex. 49 | 0.12 | 2.2 | 200 | 100 | 50 | 6.0 | 100 | Δ | 200 |

**[Table 3]**

| | Alloy composition (mass % for Ca and Sn, ppm for Ag, In, and Bi) | | | | | Corrosion elongation (%) | Cycle number (%) | Processability | Maximum strength |
|---|---|---|---|---|---|---|---|---|---|
| | Ca | Sn | In | Ag | Bi | | | | |
| Comp. Ex. 50 | 0.08 | 1.5 | 10 | 20 | 50 | 3.6 | 100 | ○ | 160 |
| Ex. 8 | 0.08 | 1.5 | 20 | 20 | 50 | 3.4 | 140 | ○ | 160 |
| Ex. 9 | 0.08 | 1.5 | 50 | 20 | 50 | 3.4 | 140 | ○ | 160 |
| Ex. 10 | 0.08 | 1.5 | 100 | 20 | 50 | 3.4 | 140 | ○ | 160 |
| Ex. 11 | 0.08 | 1.5 | 200 | 20 | 50 | 3.3 | 140 | ○ | 160 |
| Ex. 12 | 0.08 | 1.5 | 300 | 20 | 50 | 3.3 | 140 | ○ | 160 |
| Comp. Ex. 51 | 0.08 | 1.5 | 350 | 20 | 50 | 4.1 | 100 | ○ | 160 |
| Comp. Ex. 52 | 0.08 | 2.0 | 10 | 20 | 50 | 4.2 | 100 | ○ | 160 |
| Ex. 13 | 0.08 | 2.0 | 20 | 20 | 50 | 3.4 | 120 | ○ | 170 |
| Ex. 14 | 0.08 | 2.0 | 50 | 20 | 50 | 3.4 | 120 | ○ | 170 |
| Ex. 15 | 0.08 | 2.0 | 100 | 20 | 50 | 3.4 | 120 | ○ | 170 |
| Ex. 16 | 0.08 | 2.0 | 200 | 20 | 50 | 3.4 | 120 | ○ | 170 |
| Ex. 17 | 0.08 | 2.0 | 300 | 20 | 50 | 3.4 | 120 | ○ | 170 |
| Comp. Ex. 53 | 0.08 | 2.0 | 350 | 20 | 50 | 3.6 | 100 | ○ | 160 |
| Comp. Ex. 54 | 0.08 | 2.0 | 10 | 30 | 50 | 3.6 | 100 | ○ | 160 |
| Ex. 18 | 0.08 | 2.0 | 20 | 30 | 50 | 3.4 | 120 | ○ | 170 |
| Ex. 19 | 0.08 | 2.0 | 50 | 30 | 50 | 3.4 | 120 | ○ | 170 |
| Ex. 20 | 0. 08 | 2. 0 | 1 00 | 30 | 50 | 3.4 | 120 | ○ | 170 |
| Ex. 21 | 0.08 | 2.0 | 200 | 30 | 50 | 3.4 | 120 | ○ | 170 |
| Ex. 22 | 0.08 | 2.0 | 300 | 30 | 50 | 3.4 | 120 | ○ | 170 |
| Comp. Ex. 55 | 0.08 | 2.0 | 350 | 30 | 50 | 3.6 | 100 | ○ | 160 |
| Ex. 23 | 0.08 | 2.0 | 100 | 50 | 50 | 3.4 | 120 | ○ | 170 |
| Ex. 24 | 0.08 | 2.0 | 200 | 50 | 50 | 3.4 | 120 | ○ | 170 |
| Ex. 25 | 0.08 | 2.0 | 300 | 50 | 50 | 3.4 | 120 | ○ | 170 |
| Ex. 26 | 0.08 | 2.0 | 100 | 100 | 50 | 3.4 | 120 | ○ | 170 |
| Ex. 27 | 0.08 | 2.0 | 200 | 100 | 50 | 3.4 | 120 | ○ | 170 |
| Ex. 28 | 0.08 | 2.0 | 300 | 100 | 50 | 3.4 | 120 | ○ | 170 |
| Comp. Ex. 56 | 0.08 | 2.0 | 350 | 100 | 50 | 3.6 | 100 | ○ | 160 |
| Ex. 29 | 0.08 | 2.0 | 100 | 200 | 50 | 3.4 | 120 | ○ | 170 |
| Ex. 30 | 0.08 | 2.0 | 200 | 200 | 50 | 3.4 | 120 | ○ | 170 |
| Ex. 31 | 0.08 | 2.0 | 300 | 200 | 50 | 3.4 | 120 | ○ | 170 |
| Comp. Ex. 57 | 0.08 | 2.0 | 350 | 200 | 50 | 4.0 | 90 | ○ | 170 |
| Ex. 32 | 0.08 | 2.0 | 100 | 300 | 50 | 3.4 | 120 | ○ | 170 |
| Ex. 33 | 0.08 | 2.0 | 200 | 300 | 50 | 3.4 | 120 | ○ | 170 |
| Ex. 34 | 0.08 | 2.0 | 300 | 300 | 50 | 3.4 | 120 | ○ | 170 |
| Comp. Ex. 58 | 0.08 | 2.0 | 350 | 300 | 50 | 4.0 | 90 | ○ | 170 |
| Ex. 35 | 0.08 | 2.0 | 100 | 2000 | 50 | 3.4 | 120 | ○ | 170 |
| Ex. 36 | 0.08 | 2.0 | 200 | 2000 | 50 | 3.4 | 120 | ○ | 170 |
| Ex. 37 | 0.08 | 2.0 | 300 | 2000 | 50 | 3.4 | 120 | ○ | 170 |
| Comp. Ex. 59 | 0.08 | 2.0 | 350 | 2000 | 50 | 4.6 | 90 | ○ | 170 |
| Ex. 38 | 0.08 | 2.0 | 300 | 300 | 50 | 3.6 | 120 | ○ | 170 |

As seen from Table 2 and Table 3, first, when a lead alloy, which contained substantially no Bi as impurities (which contained 5 ppm or less of Bi), was used (Comparative Examples 13, 18, 23, 28, 33, and 39), the cycle number (battery life) was 100% (the battery characteristics were maintained) . When a lead alloy, which substantially contained Bi as impurities, was used and at least one of the following conditions was met: the Ca content was outside the range of 0.05 to 0.1% by mass; the Sn content was outside the range of 1.2 to 2.2% by mass; and the In content was outside the range of 0.002 to 0.03% by mass (Comparative Examples 14 to 17, 19 to 22, 24 to 27, 29 to 32, 34 to 38, and 40 to 59), the cycle number was 100% (the battery characteristics were maintained), or below 100% (the battery characteristics were degraded).

In contrast, as for all the lead alloys which contained Bi as impurities with the Ca content in the range of 0.05 to 0.1% by mass, with the Sn content in the range of 1.2 to 2.2% by mass, and with the In content in the range of 0.002 to 0.03% by mass (Examples 8 to 38), the cycle number was more than 100% (the battery characteristics were improved).

### [Creep Durability (Corrosion Elongation) and Maximum Strength]

The positive electrode was taken out of the battery which had gone dead in the test for the cycle life characteristics discussed above, and the corrosion elongation of the current collector was measured. The corrosion elongation was measured by locating or identifying the four corners and the midpoints of the four sides of the rectangular current collector and measuring the lengths (four distances) of the sides of the current collector and the distances (two distances) between the opposing midpoints. The six distances measured before the test for the cycle life characteristics were defined as La0 to Lf0, the six distances measured after the test for the cycle life characteristics were defined as Lat to Lft, and the elongation rate was determined as ∑ (Lnt - Ln0)/n (%). The results are indicated in Table 2 and Table 3. The corrosion elongation was evaluated as follows. The creep durability was maintained if the corrosion elongation was less than 3.7. The creep durability was not maintained if the corrosion elongation was 3.7 or more.

As seen from Table 2 and Table 3, when a lead alloy which contained substantially no Bi as impurities was used (Comparative Examples 13, 18, 23, 28, 33, and 39), the corrosion elongation was equal to or more than 3.7 (the creep durability was not maintained). Among the lead alloys which contained Bi as impurities, also as for the lead alloys according to Comparative Examples 14 to 17, 19 to 22, 24 to 27, 29 to 32, 34 to 38, and 40 to 59 (which contained compositions outside the scope of the present invention), the corrosion elongation was 3.7 or more (the creep durability was not maintained). In contrast, as for the lead alloys according to Examples 8 to 38 (which fell within the scope of the present invention), the corrosion elongation was less than 3.7 (the creep durability was maintained).

When a lead alloy which contained substantially no Bi as impurities was used (Comparative Examples 23, 28, 33, and 39), the maximum strength was 160 or more. Among the lead alloys which substantially contained Bi as impurities, as for all the lead alloys according to Comparative Examples 14 to 17 and 19 to 22 (which contained compositions outside the scope of the present invention), the maximum strength was below 160. In contrast, as for all the lead alloys according to Examples 8 to 38 (which fell within the scope of the present invention), the maximum strength was above 160.

From the results in Table 2 and Table 3, it was found that the lead alloys with good corrosion elongation (creep durability), a long cycle life (battery characteristics), good processability, and high maximum strength contained 0.05 to 0.1% by mass of Ca, 1.2 to 2.2% by mass of Sn, and 0.002 to 0.03% by mass of In and contained, as unavoidable impurities, at least 0.001 to 0.04% by mass of Bi, the remainder being Pb (Examples 8 to 38). It was also found that the lead alloys which further contained 0.003 to 0.2% by mass of Ag (Examples 18 to 37), among the above lead alloys, had significantly good ductility and malleability (processability) and high tensile strength (maximum strength). In the evaluation of the processability in Table 2 and Table 3, the symbol "o" is used to indicate good processability, the symbol "Δ" is used to indicate unstable processability, and the symbol "x" indicates that the lead alloy was not processable.

The lead alloy used in the embodiment is further subjected to an expanding process (note that the tensile strength of the lead alloy before being subjected to the expanding process is 52 MPa). Even if the lead alloy, which has the composition described above and has been subjected to a rolling process at a very high draft rate as in the embodiment, is subjected to an expanding process, the lead alloy is not easily recrystallized, although the lead alloy is work-hardened. Thus, a reduction in strength of the current collector can be prevented.

**[Table 4]**

| | Alloy composition (mass % for Ca and Sn, ppm for Ag, In, and Bi) | | | | | Corrosion elongation (%) | Cycle number (%) | Processability | Maximum strength |
|---|---|---|---|---|---|---|---|---|---|
| | Ca | Sn | In | Ag | Bi | | | | |
| Comp. Ex. 60 | 0.05 | 2.0 | 100 | 20 | ≤ 5 | 3.9 | 100 | ○ | 170 |
| Ex. 39 | 0.05 | 2.0 | 100 | 20 | 10 | 3.4 | 120 | ○ | 170 |
| Ex. 40 | 0.05 | 2.0 | 100 | 20 | 50 | 3.4 | 120 | ○ | 170 |
| Ex. 41 | 0.05 | 2.0 | 100 | 20 | 400 | 3.4 | 120 | ○ | 170 |
| Comp. Ex. 61 | 0.05 | 2.0 | 100 | 20 | 450 | 3.6 | 90 | Δ | 145 |
| Comp. Ex. 62 | 0.05 | 2.0 | 100 | 200 | ≤ 5 | 3.9 | 100 | ○ | 170 |
| Ex. 42 | 0.05 | 2.0 | 100 | 200 | 10 | 3.4 | 120 | ○ | 170 |
| Ex. 43 | 0.05 | 2.0 | 100 | 200 | 50 | 3.4 | 120 | ○ | 170 |
| Ex. 44 | 0.05 | 2.0 | 100 | 200 | 400 | 3.4 | 120 | ○ | 170 |
| Comp. Ex. 63 | 0.05 | 2.0 | 100 | 200 | 450 | 3.6 | 90 | Δ | 145 |

Lead alloys which contained 50 ppm of Bi were used in Examples 1 to 38. As indicated in Table 4, it was found that lead alloys which contained Bi in the range of 0.001 to 0.04% by mass (10 to 400 ppm) (Examples 39 to 44) tended to exhibit physical properties (processability, maximum strength, corrosion elongation, and battery life) that were similar to those of the lead alloys according to Examples 1 to 38. When a lead alloy which contained substantially no Bi (Comparative Examples 60 and 62) was used, the cycle number (battery life) was maintained as with Comparative Examples 13, 18, 23, 28, 33, and 39 in Table 2 and Table 3. When the content of Bi is more than 400 ppm, the maximum strength is reduced (the maximum strength is less than 160), and the cycle number is decreased (the cycle number is less than 100) .

Although an embodiment of the present invention has been specifically described above, the present invention is not limited to the embodiment and the experimental examples. For example, the positive current collector is used in the embodiment as the electrode current collector according to the present invention. As a matter of course, however, the negative current collector may also be used as long as the configuration according to the present invention is provided. That is, the dimensions, materials, shapes, etc. of members described in the embodiment and the examples discussed above may be modified based on the technical concept of the present invention unless specifically stated otherwise.

### INDUSTRIAL APPLICABILITY

According to the present invention, a lead alloy containing 0.05 to 0.1% by mass of Ca, 1.2 to 2.2% by mass of Sn, and 0.002 to 0.03% by mass of In and containing, as unavoidable impurities, at least 0.001 to 0.04% by mass of Bi, the remainder being Pb, is subjected to a rolling process at a draft rate of 80 to 97.5%, thereby increasing the lattice density of the current collector and enhancing the strength of the current collector. Therefore, according to the present invention, it is possible to improve the battery performance (such as cycle life), and furthermore to lessen a reduction in durability of the battery.

## Claims

1. A lead-acid battery comprising a battery case and an electrode group housed in the battery case together with an electrolyte, the electrode group being formed by stacking a negative electrode and a positive electrode via a separator, the negative electrode including a negative current collector on which a negative active material is held, the positive electrode including a positive current collector on which a positive active material is held, the positive current collector being made of a lead alloy, wherein:
the lead alloy contains 0.05 to 0.1% by mass of Ca, 1.2 to 2.2% by mass of Sn, and 0.002 to 0.03% by mass of In and contains, as unavoidable impurities, at least Bi, the remainder being Pb;
**characterized in that**:
the lead alloy contains 0.001 to 0.04% by mass of Bi as unavoidable impurities; and
the lead alloy is subjected to a rolling process at a draft rate of 80 to 97.5%.

2. The lead-acid battery according to claim 1, wherein
the lead alloy further contains 0.003 to 0.2% by mass of Ag.

3. The lead-acid battery according to claim 1 or 2, wherein
the lead alloy is continued to be subjected to the rolling process until a maximum elongation rate of the lead alloy becomes 150% or more of a maximum elongation rate at the time when a strength of the lead alloy reaches a maximum strength.

4. The lead-acid battery according to claim 1 or 2, wherein:
the lead alloy is continued to be subjected to the rolling process until a maximum elongation rate of the lead alloy becomes 150% or more of a maximum elongation rate at the time when a strength of the lead alloy reaches a maximum strength; and
the lead alloy is further subjected to an expanding process.

5. The lead-acid battery according to claim 1 or 2, wherein:
the lead alloy is continued to be subjected to the rolling process until a maximum elongation rate of the lead alloy becomes 150% or more of a maximum elongation rate at the time when a strength of the lead alloy reaches a maximum strength;
the lead alloy is further subjected to an expanding process; and
the tensile strength of the lead alloy before the expanding process is 52 MPa or less.

6. An electrode current collector for a lead-acid battery, wherein:
the electrode current collector is made of a lead alloy containing 0.05 to 0.1% by mass of Ca, 1.2 to 2.2% by mass of Sn, and 0.002 to 0.03% by mass of In and containing, as unavoidable impurities, at least Bi, the remainder being Pb;
**characterized in that**:
the lead alloy contains 0.001 to 0.04% by mass of Bi as unavoidable impurities; and
the lead alloy is subjected to a rolling process at a draft rate of 80 to 97.5%.

7. The electrode current collector for a lead-acid battery according to claim 6, wherein
the lead alloy further contains 0.003 to 0.2% by mass of Ag.

8. The electrode current collector for a lead-acid battery according to claim 6 or 7, wherein
the lead alloy is continued to be subjected to the rolling process until a maximum elongation rate of the lead alloy becomes 150% or more of a maximum elongation rate at the time when a strength of the lead alloy reaches a maximum strength.

9. The electrode current collector for a lead-acid battery according to claim 6 or 7, wherein:
the lead alloy is continued to be subjected to the rolling process until a maximum elongation rate of the lead alloy becomes 150% or more of a maximum elongation rate at the time when a strength of the lead alloy reaches a maximum strength; and
the lead alloy is further subjected to an expanding process.

10. The electrode current collector for a lead-acid battery according to claim 6 or 7, wherein:
the lead alloy is continued to be subjected to the rolling process until a maximum elongation rate of the lead alloy becomes 150% or more of a maximum elongation rate at the time when a strength of the lead alloy reaches a maximum strength;
the lead alloy is further subjected to an expanding process; and
the tensile strength of the lead alloy before the expanding process is 52 MPa or less.

## Patentansprüche

1. Bleiakkumulator, umfassend ein Batteriegehäuse und eine Elektrodengruppe, die in dem Batteriegehäuse zusammen mit einem Elektrolyt eingehaust sind, wobei die Elektrodengruppe gebildet wird, indem eine negative Elektrode und eine positive Elektrode mittels eines Separators gestapelt werden, wobei die negative Elektrode einen negativen Stromsammler, auf dem ein negatives aktives Material gehalten ist, umfasst, und die positive Elektrode einen positiven Stromsammler, auf dem ein positives aktives Material gehalten ist, umfasst, und wobei der positive Stromsammler aus Bleilegierung hergestellt wurde, wobei:
die Bleilegierung 0,05 bis 0,1 Masse-% Ca, 1,2 bis 2,2 Masse-% Sn und 0,002 bis 0,03 Masse-% In enthält und als unvermeidbare Verunreinigungen zumindest Bi enthält, wobei der Rest Pb ist;
**dadurch gekennzeichnet, dass**:
die Bleilegierung 0,001 bis 0,04 Masse-% Bi als unvermeidbare Verunreinigungen enthält; und
die Bleilegierung einem Walzverfahren mit einer Einzugsrate von 80 bis 97,5 % unterzogen wird.

2. Bleiakkumulator nach Anspruch 1, wobei
die Bleilegierung weiters 0,003 bis 0,2 Masse-% Ag enthält.

3. Bleiakkumulator nach Anspruch 1 oder 2, wobei
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht.

4. Bleiakkumulator nach Anspruch 1 oder 2, wobei:
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht; und
die Bleilegierung weiters einem Expandierverfahren unterzogen wird.

5. Bleiakkumulator nach Anspruch 1 oder 2, wobei:
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht;
die Bleilegierung weiters einem Expandierverfahren unterzogen wird; und
die Zugfestigkeit der Bleilegierung vor dem Expandierverfahren 52 MPa oder weniger beträgt.

6. Elektroden-Stromsammler für einen Bleiakkumulator, wobei:
der Elektroden-Stromsammler aus einer Bleilegierung hergestellt ist, die 0,05 bis 0,1 Masse-% Ca, 1,2 bis 2,2 Masse-% Sn und 0,002 bis 0,03 Masse-% In enthält und als unvermeidbare Verunreinigungen zumindest Bi enthält, wobei der Rest Pb ist;
**dadurch gekennzeichnet, dass**:
die Bleilegierung 0,001 bis 0,04 Masse-% Bi als unvermeidbare Verunreinigungen enthält; und
die Bleilegierung einem Walzverfahren mit einer Kaliberanzugsrate von 80 bis 97,5 % unterzogen wird.

7. Elektroden-Stromsammler für einen Bleiakkumulator nach Anspruch 6, wobei:
die Bleilegierung weiters 0,003 bis 0,2 Masse-% Ag enthält.

8. Elektroden-Stromsammler für einen Bleiakkumulator nach Anspruch 6 oder 7, wobei
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht.

9. Elektroden-Stromsammler für einen Bleiakkumulator nach Anspruch 6 oder 7, wobei:
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht; und
die Bleilegierung weiters einem Expandierverfahren unterzogen wird.

10. Elektroden-Stromsammler für einen Bleiakkumulator nach Anspruch 6 oder 7, wobei:
die Bleilegierung weiter dem Walzverfahren unterzogen wird, bis eine maximale Dehnungsrate der Bleilegierung 150 % oder mehr einer maximalen Dehnungsrate erreicht, zu einem Zeitpunkt, an dem eine Festigkeit der Bleilegierung eine maximale Festigkeit erreicht;
die Bleilegierung weiters einem Expandierverfahren unterzogen wird; und
die Zugfestigkeit der Bleilegierung vor dem Expandierverfahren 52 MPa oder weniger beträgt.

## Revendications

1. Batterie plomb-acide comprenant un boîtier de batterie et un groupe d'électrodes logé dans le boîtier de batterie conjointement avec un électrolyte, le groupe d'électrodes étant formé en empilant une électrode négative et une électrode positive via un séparateur, l'électrode négative incluant un collecteur de courant négatif sur lequel est maintenu un matériau actif négatif, l'électrode positive incluant un collecteur de courant positif sur lequel est maintenu un matériau actif positif, le colleteur de courant positif étant constitué d'un alliage de plomb, dans laquelle :
l'alliage de plomb contient 0,05 à 0,1 % en masse de Ca, 1,2 à 2,2 % en masse de Sn et 0,002 à 0,03 % en masse d'In et contient, en tant qu'impuretés inévitables, au moins du Bi, le reste étant du Pb ;
**caractérisée en ce que** :
l'alliage de plomb contient 0,001 à 0,04 % en masse de Bi en tant qu'impuretés inévitables ; et
l'alliage de plomb est soumis à un processus de laminage à un taux d'étirage de 80 à 97,5 %.

2. Batterie plomb-acide selon la revendication 1, dans laquelle
l'alliage de plomb contient en outre 0,003 à 0,2 % en masse d'Ag.

3. Batterie plomb-acide selon la revendication 1 ou 2, dans laquelle
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale.

4. Batterie plomb-acide selon la revendication 1 ou 2, dans laquelle :
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale ; et
l'alliage de plomb est en outre soumis à un processus de dilatation.

5. Batterie plomb-acide selon la revendication 1 ou 2, dans laquelle
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale ;
l'alliage de plomb est en outre soumis à un processus de dilatation ; et
la résistance à la traction de l'alliage de plomb avant le processus de dilatation est de 52 MPa ou moins.

6. Collecteur de courant d'électrode pour une batterie plomb-acide, dans lequel :
le collecteur de courant d'électrode est constitué d'un alliage de plomb contenant 0,05 à 0,1 % en masse de Ca, 1,2 à 2,2 % en masse de Sn et 0,002 à 0,03 % en masse d'In et contenant, en tant qu'impuretés inévitables, au moins du Bi, le reste étant du Pb ;
**caractérisé en ce que** :
l'alliage de plomb contient de 0,001 à 0,04 % en masse de Bi en tant qu'impuretés inévitables ; et
l'alliage de plomb est soumis à un processus de laminage à un taux d'étirage de 80 à 97,5 %.

7. Collecteur de courant d'électrode pour une batterie plomb-acide selon la revendication 6, dans lequel
l'alliage de plomb contient en outre 0,003 à 0,2 % en masse d'Ag.

8. Collecteur de courant d'électrode pour une batterie plomb-acide selon la revendication 6 ou 7, dans lequel
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale.

9. Collecteur de courant d'électrode pour une batterie plomb-acide selon la revendication 6 ou 7, dans lequel :
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale ; et
l'alliage de plomb est en outre soumis à un processus de dilatation.

10. Collecteur de courant d'électrode pour une batterie plomb-acide selon la revendication 6 ou 7, dans lequel :
l'alliage de plomb reste soumis au processus de laminage jusqu'à ce qu'un taux d'allongement maximum de l'alliage de plomb soit de 150 % ou plus d'un taux d'allongement maximum au moment où une résistance de l'alliage de plomb atteint une résistance maximale ;
l'alliage de plomb est en outre soumis à un processus de dilatation ; et
la résistance à la traction de l'alliage d'aluminium avant le processus de dilatation est de 52 MPa ou moins.
